# FASCICULE DE BREVET EUROPEEN

(11) **EP 2 231 392 B1**
(45) Date de publication et mention de la délivrance du brevet: **03.07.2013**
(21) Numéro de dépôt: 08761744.5
(22) Date de dépôt: 08.01.2008
(51) Int. Cl.: B32B 3/28, E04B 1/80, E04C 2/296, B32B 7/12, B32B 5/18, B32B 27/06, E04D 3/35, B32B 37/02

(54) **Procédé de fabrication d'un matériau composite isolant**
Verfahren zur Herstellung eines Isolierverbundmaterials
Process for manufacturing an insulating composite material

(43) Date de publication de la demande: 29.09.2010
(73) Titulaire: Bs Industrie, 77820 Le Chatelet En Brie (FR)
(72) Inventeur: BOULAIN, Bruno, F-77940 Thoury Ferottes (FR)
(74) Mandataire: Novagraaf Technologies
(86) Numéro de dépôt international: PCT/FR2008/000021
(87) Numéro de publication internationale: WO 2009/087279

(56) Documents cités:
- EP-A- 1 939 374
- WO-A-00/15924
- DE-A1- 2 433 136
- DE-A1- 2 946 855
- NL-C2- 1 029 469
- US-A- 4 671 985
- US-A- 4 996 095
- US-A1- 2003 021 979
- US-A1- 2004 091 722

## Description

La présente invention se rapporte à un procédé de fabrication d'un matériau composite,

plus particulièrement d'un matériau composite isolant destiné à la construction.

L'art antérieur connaît déjà des matériaux isolants constitués de l'association de différents complexes.

WO 0015924 décrit un complexe isolant métal-polymère-métal réalise en une seule opération.

Cependant, ces matériaux ne sont pas toujours très efficaces dans les pays chauds, en particulier du fait que lieur capacité d'isolation est déterminée uniquement en fonction des conditions d'ensoleillement et plus généralement des paramètres liés à l'apport de chaleur venant de l'extérieur du bâtiment.

Ces matériaux ne permettent donc pas d'assurer une régulation de la température de l'air ambiant.

Or, il se trouve que la plupart des constructions dont l'ambiance n'est pas climatisée peuvent trouver un équilibre de température intérieure si l'on maîtrise les rayonnements infrarouges tout en optimisant le niveau d'isolation thermique.

Le matériau composite obtenu par le procédé de la présente invention comprend un panneau extérieur de bardage, un élément intercalaire isolant et un revêtement intérieur dont au moins la face apparente a un pouvoir réfléchissant au rayonnement infrarouge.

Selon une caractéristique avantageuse, ledit élément intercalaire a une épaisseur comprise entre 1 et 10 mm et présente un coefficient de conductibilité thermique inférieur ou égal à 0,050 W/mK.

Selon une autre caractéristique, la face apparente du revêtement intérieur présente une réflectance supérieure ou égale à 50%.

Selon encore une autre caractéristique, la face apparente du revêtement intérieur a une densité optique-d'au moins 2,2.

Selon une variante spécifique, ledit revêtement intérieur présente, au moins sur sa face apparente, une couche d'alumine dont l'épaisseur est comprise entre 15 et 350 Angströms.

De préférence, ledit revêtement intérieur présente une épaisseur comprise entre 10 et 150 microns.

Ledit revêtement intérieur est constitué d'au moins un film plastique et ledit élément intercalaire est constitué d'une mousse.

L'objet de l'invention est un procédé de fabrication du matériau composite selon la présente revendication 1.

Le matériau composite de l'invention permet de réduire les effets de la chaleur solaire à l'intérieur du bâtiment en contrôlant, par réflexion, les rayonnements infrarouges émis, d'une part, par le bardage et, d'autre part, par le sol tout en maîtrisant, par isolation, les apports calorifiques.

le matériau de l'invention peut être utilisé tant en couverture qu'en façade.

Il peut, en outre, être façonné à la demande sans risque de délamination, de décollement ou de rupture de l'un des constituants ce qui autorise son emploi dans des applications très diversifiées y compris hors secteur du bâtiment.

En particulier, il est possible de conformer les panneaux de bardage pour les adapter aux profils et géométries de l'ouvrage, tout en conservant les propriétés et caractéristiques du matériau de l'invention.

À ensoleillement identique et grâce à la synergie entre l'élément isolant et le revêtement réfléchissant, on observe une réduction significative de la température de l'enceinte couverte par le matériau de l'invention par rapport à une même enceinte située sous une tôle nue de bardage.

Cette réduction s'accompagne d'une stabilisation de la température de l'enceinte.

On comprendra mieux l'invention à l'aide de la description, faite ci-après à titre purement explicatif, d'un mode de réalisation de l'invention, en référence aux figures annexées :
- la figure 1 illustre une vue en coupe d'un mode de réalisation du matériau de l'invention appliqué à un panneau de bardage;
- la figure 2 représente une vue en coupe du mode de réalisation de la figure 1 après mise en forme spécifique.

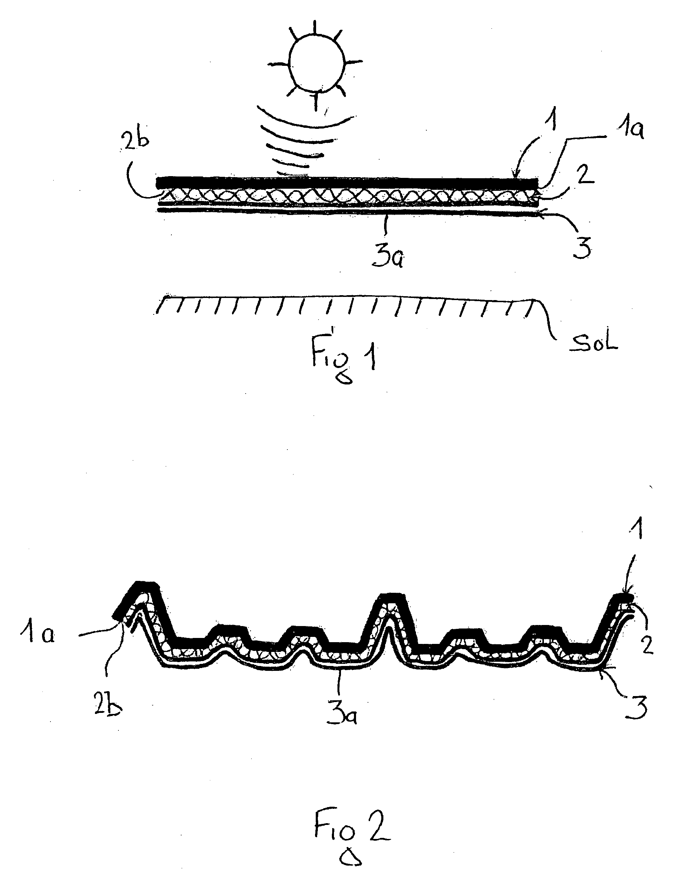

L'élément de matériau composite selon l'invention et tel qu'il est illustré sur la figure 1, comprend un panneau extérieur 1 de bardage, un élément intercalaire isolant 2 et un revêtement intérieur 3 dont au moins la face apparente 3a a un pouvoir réfléchissant au rayonnement infrarouge.

Le matériau faisant l'objet de cette invention est destiné à l'isolation thermique d'un espace sous toiture et/ou à l'intérieur de volumes délimités par des parois verticales.

Ce matériau peut être utilisé pour fabriquer des panneaux isolants destinés au secteur du BTP ainsi qu'aux industriels producteurs de bardages ou de constructions métalliques. Il offre un moyen d'isolation à la chaleur très économique, notamment pour des bâtiments agricoles ou industriels munis d'une simple peau de bardage métallique et, en particulier, pour ceux installés dans les zones chaudes ou tempérées où l'ensoleillement est très fort.

L'élément intercalaire isolant 2 est un complexe constitué, par exemple, d'une mousse de polyoléfine éventuellement réticulée, à structure cellulaire ou non-cellulaire, de type polypropylène, polyéthylène téréphtalate, polyéthylène, polychlorure de vinyle.

L'épaisseur de l'élément intercalaire 2 est comprise entre 1 et 10mm et son coefficient λ de conductibilité thermique est inférieur ou égal à 0.050 W/mK pour que le complexe puisse assurer une isolation efficace.

L'élément intercalaire isolant 2 peut être pourvu, sur sa face intérieure 2b tournée vers le panneau de bardage, d'un média adhésif du type "Hot Melt" pour sa fixation sur la face interne la du bardage 1.

Ce média adhésif est constitué d'une émulsion d'acrylique ou d'un mélange d'acrylique et de solvant ou d'un dépôt de colle thermo-fusible à base de caoutchouc synthétique ou de polymères équivalents.

Cet adhésif a, le cas échéant, des propriétés auto-adhésives ou réactivables, par exemple, par apport de chaleur.

L'élément intercalaire isolant 2 est pourvu d'un revêtement intérieur 3 à propriétés réfléchissantes, en particulier vis-à-vis des rayons infrarouges.

Ce revêtement 2 peut être constitué d'une couche de métallisation déposée ou projetée directement sur l'élément isolant par des techniques de sublimation sous vide, d'électrolyse ou assemblée à l'élément intercalaire isolant par collage ou soudage ultrason, haute fréquence ou thermique.

Le revêtement réfléchissant 3 peut comprendre, notamment, pour des raisons économiques et pratique, un film plastique métallisé de polyester ou de polypropylène d'une épaisseur variant entre 12 et 50 microns. Pour les besoins de l'assemblage avec l'élément isolant 2, le revêtement réfléchissant peut être coextrudé ou assemblé avec un film polyéthylène basse ou haute densité d'épaisseur comprise entre 10 et 80 microns. Dans tous les cas, l'épaisseur totale du revêtement 3 ne devrait pas dépasser 150 microns.

La face métallisée du revêtement 3 réfléchissant est disposée du côté apparent depuis l'intérieur du bâtiment.

Il est toutefois possible de prévoir que les deux faces du revêtement 3 soient métallisées.

Le revêtement 2 a une densité optique minimum de 2.2 et une réflectance aux infrarouges supérieurs ou égaux à 50%.

De préférence, la face métallisée est réalisée par un dépôt d'alumine dont l'épaisseur est comprise entre 15 et 350 Angströms (10⁻¹⁰m).

Pour obtenir une bonne réflectivité de la face métallisée, celle-ci est positionnée du côté extérieur du substrat complexe 2+3 et est recouverte d'un vernis de protection, servant à la fois au processus d'application du complexe et à la protection dans le temps contre l'oxydation de la couche d'alumine.

Le complexe isolant/réfléchissant 2+3 permet de réduire d'environ 30% l'apport thermique à l'intérieur de l'enceinte pour un facteur solaire identique.

Le complexe isolant/réfléchissant 2+3 va pouvoir subir, par la suite, le formage du bardage sans se déchirer et sans perdre ses propriétés isolante et réfléchissante.

Les bardages sur lesquels le matériau complexe de l'invention peut s'appliquer sont des bardages peints, galvanisés, en acier ou en aluminium, pré-laqués avec ou sans primaire d'accrochage.

Il peut s'agir de différentes épaisseurs de bardages utilisées généralement pour les bardages de toiture et de murs. Ces bardages peuvent être plans ou mis en forme.

Le procédé de fabrication du matériau de l'invention est mis en oeuvre de la manière suivante
- On réalise, tout d'abord, un substrat complexe par application et fixation, sur l'élément isolant 2, du revêtement intérieur 3 en disposant au moins une face réfléchissante à l'extérieur, puis,
- on solidarise ledit substrat complexe 2+3 sur la face intérieure d'un panneau de bardage 1 au moyen d'un média adhésif.

L'application sur des tôles planes s'effectue par déroulage du complexe et retrait d'un film protecteur de la face adhésive.

L'application du complexe 2+3 sur le bardage s'effectue à une température comprise entre 0°C et 40°C et entre 20 et 90% d'humidité relative. Dans les cas de forte humidité, le bardage est essuyé avant application du complexe.

La mise en forme des panneaux ou tôles de bardage s'effectue par calandrage pour obtenir des tôles nervurées ou ondulées comme représenté sur la figure 2.

Le passage entre plusieurs paires d'arbres munis de galets déforme progressivement la tôle métallique au fur et à mesure de son défilement dans les différents trains de galets.

Le complexe isolant comme décrit plus haut supporte le passage en trains de galets du fait de sa résistance à la rupture et de son allongement faible. Un allongement de 8% pour un effort de traction de 800 N/m dans le sens transversal du complexe isolant/réfléchissant convient pour éviter les écrasements ou la rupture du complexe pendant le formage des tôles.

La mise en forme des tôles métalliques équipées du complexe isolant/réfléchissant peut aussi être effectuée par pressage à froid ou à chaud. Cette technique nécessite une résistance à la rupture plus importante du complexe isolant/réfléchissant mais permet d'effectuer conjointement le thermoformage ce qui permet de renforcer la rigidité de la tôle métallique.

## Revendications

1. Procédé de fabrication d'un matériau composite pour l'isolation thermique comprenant :
- un panneau, extérieur (1) de bardage, constitué d'une tôle métallique plane,
- un élément intercalaire isolant (2), constitué d'une mousse, préalablement pourvu d'un média adhésif recouvert d'un film protecteur,
- et un revêtement intérieur (3), constitué d'au moins un film plastique, dont au moins la face apparente (3a) a un pouvoir réfléchissant au rayonnement infrarouge,
**caractérisé en ce que** :
- on réalise un substrat complexe (2+3) par application et fixation sur l'élément intercalaire isolant (2), du revêtement intérieur (3) en disposant au moins une face réfléchissante à l'extérieur ;
- on solidarise ledit substrat complexe sur la face intérieure du panneau de bardage (1) au moyen du média adhésif par déroulage du complexe (2+3) sur le bardage (1) après retrait du film protecteur du média adhésif ;
- puis, on effectue le formage ultérieur du matériau composite au moyen d'un train de galets.

2. Procédé de fabrication d'un matériau composite selon la revendication 1 **caractérisé en ce qu'**on solidarise le substrat complexe (2+3) sur le panneau de bardage (1) à une température comprise entre 0°C et 40°C et avec une humidité relative comprise entre 20% et 90%.

3. Procédé de fabrication d'un matériau composite selon l'une quelconque des revendications précédentes, **caractérisé en ce qu'**on réalise ledit élément intercalaire (2) de sorte qu'il présente une épaisseur comprise entre 1 et 10 mm et un coefficient de conductibilité thermique inférieur ou égal à 0,050 W/mK.

4. Procédé de fabrication d'un matériau composite selon l'une quelconque des revendications précédentes, **caractérisé en ce qu'**on réalise le revêtement intérieur (3) de sorte que la face apparente (3a) dudit revêtement intérieur (3) présente une réflectance supérieure ou égale à 50%.

5. Procédé de fabrication d'un matériau composite selon l'une quelconque des revendications précédentes, **caractérisé en ce qu'**on réalise le revêtement intérieur (3) de sorte que la face apparente (3a) dudit revêtement intérieur (3) a une densité optique d'au moins 2,2.

6. Procédé de fabrication d'un matériau composite selon l'une quelconque des revendications précédentes, **caractérisé en ce qu'**on applique, au moins sur la face apparente (3a) dudit revêtement intérieur (3), une couche d'alumine dont l'épaisseur est comprise entre 15 et 350 Angströms.

7. Procédé de fabrication d'un matériau composite selon l'une quelconque des revendications précédentes, **caractérisé en ce qu'**on réalise ledit revêtement intérieur (3) de sorte qu'il présente une épaisseur comprise entre 10 et 150 microns.

8. Procédé de fabrication d'un matériau composite selon l'une quelconque des revendications 1 à 7, **caractérisé en ce que** la mousse de l'élément intercalaire isolant (2) est une mousse polyéthylène à structure cellulaire.

9. Procédé de fabrication d'un matériau composite selon la revendication 8, **caractérisé en ce que** la mousse polyéthylène à structure cellulaire est réticulée.

## Patentansprüche

1. Verfahren zur Herstellung eines Verbundmaterials zur thermischen Isolierung, umfassend:
- eine äußere Verkleidungsplatte (1), hergestellt aus einem ebenen metallischen Blech,
- ein isolierendes Zwischenelement (2), bestehend aus einem Schaum, der zuvor mit einem haftenden Medium versehen wurde, beschichtet mit einem Schutzfilm,
- und eine innere Verkleidung (3), bestehend aus mindestens einer Kunststofffolie, wobei mindestens die sichtbare Fläche (3a) ein Reflexionsvermögen gegenüber der Infrarotstrahlung aufweist,
**dadurch gekennzeichnet, dass**
- ein komplexes Substrat (2 + 3) durch die Aufbringung und die Befestigung auf dem isolierenden Zwischenelement (2) der inneren Verkleidung (3) hergestellt wird, wobei mindestens eine reflektierende Seite nach außen hin angebracht wird,
- das komplexe Substrat mit der inneren Seite der Verkleidungsplatte (1) mit Hilfe des haftenden Mediums durch das Abwickeln des Komplexes (2 + 3) auf der Verkleidung (1) fest verbunden wird, nachdem der Schutzfilm vom klebenden Medium entfernt wurde;
- dann die endgültige Formung des Verbundmaterials mit Hilfe eines Laufrollenfahrwerks durchgeführt wird.

2. Verfahren zur Herstellung eines Verbundmaterials nach Anspruch 1, **dadurch gekennzeichnet, dass** das komplexe Substrat (2 + 3) auf der Verkleidungsplatte (1) bei einer Temperatur zwischen 0 und 40 °C und mit einer relativen Feuchtigkeit zwischen 20 % und 90 % fest verbunden wird.

3. Verfahren zur Herstellung eines Verbundmaterials nach einem der vorhergehenden Ansprüche, **dadurch gekennzeichnet, dass** das Zwischenelement (2) derart hergestellt wird, dass es eine Dichte zwischen 1 und 10 mm und einen thermischen Leitfähigkeitskoeffizienten von weniger oder gleich 0,050 W/mK aufweist.

4. Verfahren zur Herstellung eines Verbundmaterials nach einem der vorhergehenden Ansprüche, **dadurch gekennzeichnet, dass** die innere Verkleidung (3) derart durchgeführt wird, dass die sichtbare Seite (3a) der inneren Verkleidung (3) einen Reflektionsgrad von höher oder gleich 50 % aufweist.

5. Verfahren zur Herstellung eines Verbundmaterials nach einem der vorhergehenden Ansprüche, **dadurch gekennzeichnet, dass** die innere Verkleidung (3) derart durchgeführt wird, dass die sichtbare Seite (3a) der inneren Verkleidung (3) eine optische Dichte von mindestens 2,2 aufweist.

6. Verfahren zur Herstellung eines Verbundmaterials nach einem der vorhergehenden Ansprüche, **dadurch gekennzeichnet, dass** mindestens auf die sichtbare Seite (3a) der inneren Verkleidung (3) eine Aluminiumschicht aufgebracht wird, deren Dicke zwischen 15 und 350 Angström liegt.

7. Verfahren zur Herstellung eines Verbundmaterials nach einem der vorhergehenden Ansprüche, **dadurch gekennzeichnet, dass** die innere Verkleidung (3) derart durchgeführt wird, dass sie eine Dichte zwischen 10 und 150 Mikrometer aufweist.

8. Verfahren zur Herstellung eines Verbundmaterials nach einem der Ansprüche 1 bis 7, **dadurch gekennzeichnet, dass** der Schaum des isolierenden Zwischenelement (2) ein Polyethylenschaum mit Zellstruktur ist.

9. Verfahren zur Herstellung eines Verbundmaterials nach Anspruch 8, **dadurch gekennzeichnet, dass** der Polyethylenschaum mit Zellstruktur vernetzt ist.

## Claims

1. Method for manufacturing a composite material for thermal insulation comprising:
- an outer cladding panel (1), consisting of a flat metal sheet,
- an insulating insert element (2), consisting of a foam, previously provided with an adhesive agent coated with a protective film,
- and an inner coating (3), consisting of at least one plastic film, wherein at least the exposed face (3a) is capable of reflecting infrared radiation,
**characterised in that**:
- a complex substrate (2+3) is produced by applying and fixing the inner coating (3) on the insulating insert element (2), arranging at least one reflective surface facing outwards;
- said complex substrate is secured to the inner face of the cladding panel (1) by means of the adhesive agent by unrolling the complex (2+3) onto the cladding (1) after removing the protective film from the adhesive agent;
- and, the composite material is subsequently shaped by means of a roller train.

2. Method for manufacturing a composite material according to claim 1 **characterised in that** the complex substrate (2+3) is secured to the cladding panel (1) at a temperature between 0°C and 40°C and with a relative humidity between 20% and 90%.

3. Method for manufacturing a composite material according to any of the above claims, **characterised in that** said insert element (2) is produced so as to have a thickness between 1 and 10 mm and a thermal conductivity less than or equal to 0.050 W/mK.

4. Method for manufacturing a composite material according to any of the above claims, **characterised in that** the inner coating (3) is produced such that the exposed face (3a) of said inner coating (3) has a reflectance greater than or equal to 50%.

5. Method for manufacturing a composite material according to any of the above claims, **characterised in that** the inner coating (3) is produced such that the exposed face (3a) of said inner coating (3) has an optical density of at least 2.2.

6. Method for manufacturing a composite material according to any of the above claims, **characterised in that** an alumina layer between 15 and 350 Angstroms in thickness is applied at least on the exposed face (3a) of said inner coating (3).

7. Method for manufacturing a composite material according to any of the above claims, **characterised in that** said inner coating (3) is produced so as to be between 10 and 150 microns in thickness.

8. Method for manufacturing a composite material according to any of claims 1 to 7, **characterised in that** the foam of the insulating insert element (2) is a polyethylene foam having a cellular structure.

9. Method for manufacturing a composite material according to claim 8, **characterised in that** the polyethylene foam having a cellular structure is crosslinked.
